**Europäisches Patentamt**

**European Patent Office**

**Office européen des brevets**

(11) Veröffentlichungsnummer: **0 247 060**
**B1**

(12) **EUROPÄISCHE PATENTSCHRIFT**

(45) Veröffentlichungstag der Patentschrift:
**17.11.88**

(51) Int. Cl.⁴: **B 62 D 5/083,** F 16 K 47/04

(21) Anmeldenummer: **86902382.0**

(22) Anmeldetag: **26.03.86**

(86) Internationale Anmeldenummer:
**PCT/EP 86/00181**

(87) Internationale Veröffentlichungsnummer:
**WO 86/05753 (09.10.86** Gazette 86/22)

(54) **DREHSCHIEBERVENTIL FÜR HYDRAULISCHE HILFSKRAFTLENKUNGEN.**

(30) Priorität: **06.04.85 PC /EP85/001 58**

(43) Veröffentlichungstag der Anmeldung:
**02.12.87 Patentblatt 87/49**

(45) Bekanntmachung des Hinweises auf die Patenterteilung:
**17.11.88 Patentblatt 88/46**

(84) Benannte Vertragsstaaten:
**DE GB**

(56) Entgegenhaltungen:
**EP - A - 0 012 043**
**EP - A - 0 021 970**
**EP - A - 0 095 965**
**FR - A - 2 509 006**
**GB - A - 2 028 240**
**GB - A - 2 062 560**
**GB - A - 2 102 361**
**US - A - 4 452 274**
**US - A - 4 460 016**

**Patent Abstracts of Japan, Band 8, Nr. 201**
**(M-325)(1638), 14. September 1984**

(73) Patentinhaber: **ZAHNRADFABRIK FRIEDRICHSHAFEN AKTIENGESELLSCHAFT, Löwentaler Strasse 100 Postfach 2520,**
**D-7990 Friedrichshafen 1 (DE)**

(72) Erfinder: **ELSER, Dieter, Jägerstrasse 10,**
**D-7081 Essingen (DE)**
Erfinder: **HETZEL, Helmut, Lerchenstrasse 45,**
**D-7070 Schwäbisch Gmünd (DE)**
Erfinder: **KELLER, Manfred, Saalestrasse 2,**
**D-7070 Schwäbisch Gmünd (DE)**

(74) Vertreter: **Raue, Reimund, Zahnradfabrik Friedrichshafen AG Löwentaler Strasse 100 Postfach 2520,**
**D-7990 Friedrichshafen 1 (DE)**

## Beschreibung

Die Erfindung betrifft ein Drehschieberventil für hydraulische Hilfskraftlenkungen von Kraftfahrzeugen nach dem Oberbegriff von Anspruch 1.

Drehschieberventile für Hydrolenkungen verursachen in der Normalausführung sogenannte Zischgeräusche, welche an den Steuerkanten entstehen. Diese Zischgeräusche sind abhängig von dem Druckverhältnis vor und hinter den Steuerkanten. Je grösser das Druckgefälle ist, desto lauter werden die Zischgeräusche. Das Drehschieberventil ist in der Regel über einen metallischen Betätigungsstrang mit dem Lenkhandrad verbunden. Die dadurch mögliche Körperschallübertragung verstärkt dieses «Zischen» an der Lenkradposition noch zusätzlich.

Ein Drehschieberventil, das bereits Vorkehrungen zur Beseitigung der an den Steuerkanten entstehenden Zischgeräusche aufweist, ist bereits aus der den Oberbegriff bildenden DE-OS 28 35 815 bekannt. Dieses Drehschieberventil ist so aufgebaut, dass unmittelbar hinter den Zulaufbohrungen vorhandene Zulaufsteuerkanten den Pumpendruck auf die Höhe des jeweils erforderlichen Arbeitsdruckes hochsteuern. Die Zulaufsteuerkanten sind zum Ansteuern des Druckes mit Steuerfasen versehen. Bei ausgesteuertem Drehschieberventil wird über beispielsweise drei von insgesamt sechs Zulaufsteuerkanten Drucköl in drei zugehörige entlastete Steuernuten der Ventilbüchse abgeregelt. Die anderen drei Zulaufsteuerkanten stellen einen weit geöffneten Spalt zu einer an den aktiven Druckraum angeschlossenen Nut der Ventilbüchse her. Über die jeweils entlasteten Steuernuten wird das aus dem Stellmotor ausgeschobene Ölvolumen abgeleitet. Diese Steuernuten stehen über sechs als Bohrungen ausgeführte konstante Drosselstellen mit drei an den Öltank angeschlossenen Rücklaufnuten der Ventilbüchse in Verbindung. Die Drosselbohrungen sind hierbei verantwortlich für einen Aufstau des Drucköles. Da die jeweils drei Zulaufsteuerkanten zum Zwecke eines gesteuerten Druckaufbaues einen Teil des Pumpenzulaufstromes in den aufgestauten Rücklauf abregeln, ist das Druckgefälle an diesen Zulaufsteuerkanten stark verringert. Störende Strömungsgeräusche können somit vermieden werden. Der Aufstau des Rücklauföles in den Aussteuerstellungen des Drehschlieberventils hat jedoch den Nachteil einer verschlechterten Energiebilanz, da ja im aktiven Druckraum des Stellmotors zur Überwindung des Aufstaues ein höherer Druck aufgebaut werden muss. Das bekannte Drehschieberventil erfordert ausserdem einen verhältnismässig hohen Fertigungsaufwand, da die parallelen Drosselbohrungen im Drehschieber in zusätzliche Steuernuten einmünden. Diese Steuernuten arbeiten mit weiteren zusätzlichen Rücklaufnuten in der Ventilbrüche zusammen.

Der Erfindung liegt daher die Aufgabe zugrunde, den Aufstau des Rücklauföles aus dem inaktiven Druckraum des Stellmotors während einer Lenkbewegung zu vermeiden. Dabei soll das Drehschieberventil ohne Zischgeräusche arbeiten.

Ausserdem soll durch Fortfall von Nuten das Drehschieberventil vereinfacht werden.

Diese Aufgabe ist durch die Merkmale der Ansprüche 1 bis 5 gelöst. Nach dem Hauptmerkmal der Erfindung ist eine in Durchflussrichtung hinter den Zulaufsteuerkanten gelegene Rücklaufnut im Drehschieber zum Steuern des Druckaufbaues im aktiven Druckraum des Stellmotors, auf einem Teil ihrer Länge in jeder Auslenkrichtung, mit einem Tiefspalt und mit von dem Tiefspalt räumlich getrennten Drosselspalten versehen. Die Drosselspalte sind in Umfangsrichtung länger als die Tiefspalte. Vorteilhaft sind die Drosselspalte beidseitig des Tiefspaltes angebracht. Der Tiefspalt liegt im mittleren Bereich der Rücklaufnut. Durch die besondere Lage der Spalte kann das Rücklauföl in der Neutralstellung des Drehschieberventils über den einen grossen Abströmquerschnitt aufweisenden Tiefspalt ungehindert zur Rücklaufnut abströmen. Mit zunehmender Verdrehung des Drehschieberventils wird der Querschnitt des Tiefspaltes fortschreitend verkleinert, wobei der Tiefspalt den Druck im Niederdruckbereich anregelt. Nach Schliessen des Tiefspaltes wird bei weiterer Verdrehung der Druck im Hochdruckbereich nur noch an den zwei schmalen Drosselspalten angeregelt. Durch die geringe Höhe der Drosselspalte einerseits und deren verhältnismässig grosse Spaltlänge andererseits wird an jedem Drosselspalt ein Laminarstrom zur Rücklaufnut erzeugt. Die Druckenergie baut sich dabei über die grosse Spaltlänge ab, so dass ohne Abstrahlgeräusche unmittelbar in den Rücklauf abgeregelt werden kann. Die Tiefspalte und die Drosselspalte sind durch Prägen preisgünstig herstellbar.

Ein Ausführungsbeispiel der Erfindung ist nachfolgend anhand der Zeichnung näher erläutert. Es zeigen:

Fig. 1 einen vereinfachten und vergrösserten Querschnitt durch das erfindungsgemässe Drehschieberventil in der Neutralstellung, wobei die im Lenkgehäuse befindlichen Druckkanäle als Leitungen zu einem Stellmotor dargestellt sind,

Fig. 2 einen stark vergrösserten Teilquerschnitt der Einzelheit II in Fig. 1,

Fig. 3 eine Draufsicht in Richtung des Pfeiles III der Fig. 1,

Fig. 4 einen Teilquerschnitt entsprechend der Linie IV-IV in Fig. 3,

Fig. 5 eine Draufsicht in Richtung des Pfeiles V der Fig. 1,

Fig. 6 einen Querschnitt entsprechend Fig. 1, jedoch bei ausgelenktem Drehschieberventil,

Fig. 7 eine Draufsicht in Richtung des Pfeiles VII der Fig. 6, und

Fig. 8 einen Teilquerschnitt entsprechend der Linie VIII-VIII in Fig. 7.

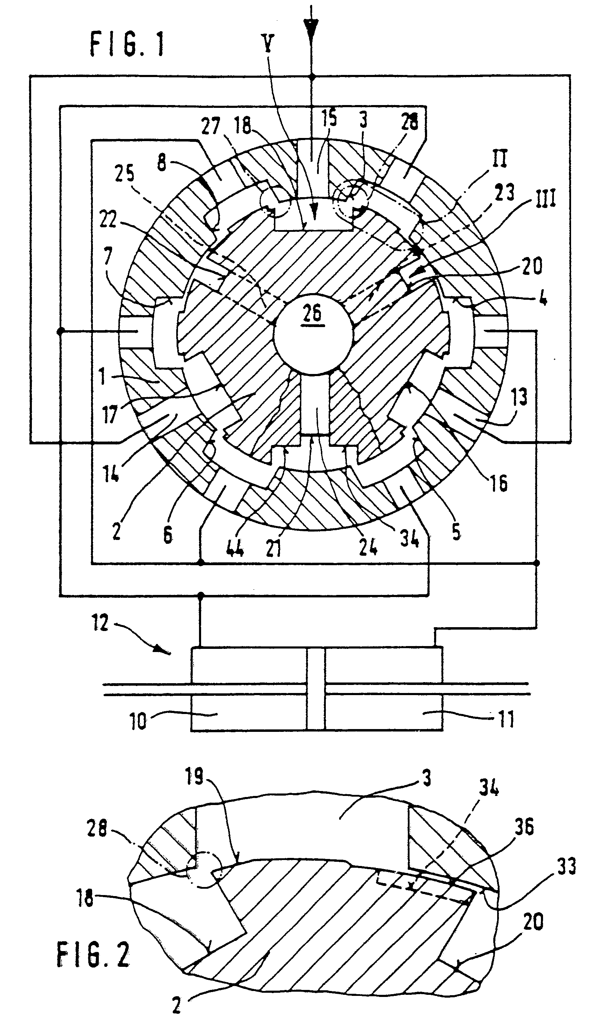

In Fig. 1 ist das Drehschieberventil in Neutralstellung gezeichnet. Das Drehschieberventil besteht in bekannter Weise aus einer Ventilbüchse 1 und einem Drehschieber 2. Die Ventilbüchse 1 enthält in üblicher Weise sechs gestossene Steuernuten 3 bis 8, von denen drei Steuernuten 3, 5, 7 an einen Druckraum 10 und drei weitere Steuernuten 4, 6, 8 an einen Druckraum 11 eines Stellmotors 12 angeschlossen sind. Weiter enthält die Ventilbüchse 1 drei mit einer Pumpe verbundene Zulaufbohrungen 13 bis 15. In den Drehschieber 2 sind den Zulaufbohrungen 13 bis 15 gegenüberliegende Steuernuten 16 bis 18 eingearbeitet. Im Drehschieber 2 befinden sich ausserdem Rücklaufnuten 20 bis 22, die über zugehörige Bohrungen 23 bis 25 an eine zentrale, mit dem Öltank in Verbindung stehende Rücklaufbohrung 26 angeschlossen sind.

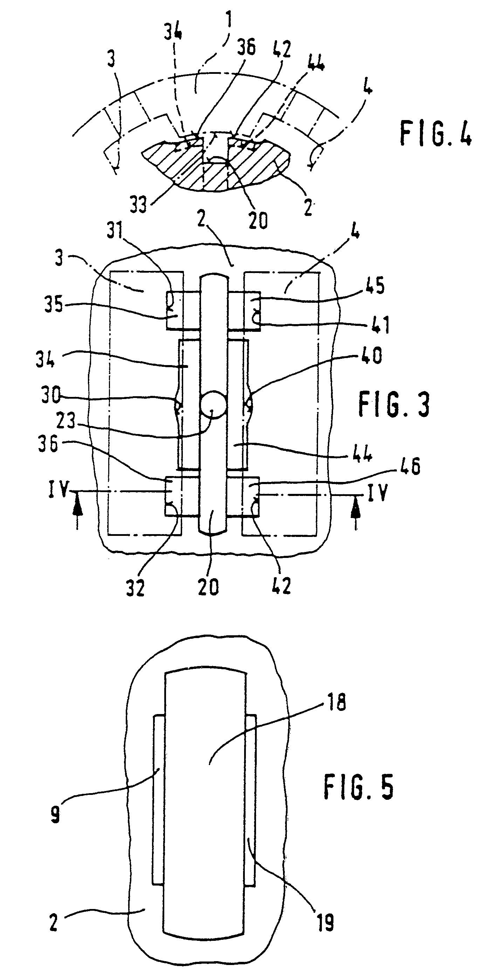

Der besseren Übersichtlichkeit wegen sind nachfolgend die am Umfang dreimal vorhandenen Steuerkanten- und Nutensysteme nur noch jeweils an einem System erwähnt und entsprechend mit Bezugsziffern versehen. An der der Zulaufbohrung 15 gegenüberliegenden Steuernut 18 befinden sich Zulaufsteuerkanten 27 und 28. Die Zulaufsteuerkante 28 ist in vergrössertem Massstab aus Fig. 2 zu ersehen, während die Draufsicht auf die Steuernut 18 nach Fig. 5 Steuerfasen 9 und 19 erkennen lässt. Diese Steuerfasen 9 und 19 sind möglichst breit und mit zunehmender Tiefe zum Nutengrund der Steuernut 18 hin ausgeführt. Wird z. B. der Drehschieber 2 in Fig. 2 nach links verdreht, so wird die mit der Ventilbüchse 1 einen Spalt bildende Steuerfase 19 mit fortschreitender Verdrehung geschlossen. Derartige Steuerfasen 9 und 19 an Zulaufsteuerkanten 27 und 28 sind bekannt. In Fig. 1 sind diese Steuerfasen zur Verdeutlichung übertrieben dargestellt.

Nach der Erfindung ist an der in Durchlassrichtung, z. B. hinter der Zulaufsteuerkante 28, gelegenen Rücklaufnut 20 zur Steuerung des Druckaufbaues folgende Einrichtung vorgesehen: Die Draufsicht in Richtung des Pfeiles III von Fig. 1 zeigt in Fig. 3 in der Mitte der Längserstreckung der Rücklaufnut 20 für die eine Lenkrichtung eine kurvenförmige Einprägung 30 und beiderseits der Einprägung 30 zwei weitere Einprägungen 31 und 32. Diese Einprägungen befinden sich im Drehschieber 2 am Rande der Rücklaufnut 20 und leiten in diese über. Die Einprägungen 30 bis 32 bilden zusammen mit einem umgebenden Steg 33 (Fig. 4) an der Ventilbüchse 1 Strömungsspalte. Die mittlere Einprägung 30 ist verhältnismässig tief, so dass ein sogenannter Tiefspalt 34 mit grossem Querschnitt entsteht. Die seitlichen Einprägungen 31 und 32 sind sehr flach und bilden sogenannte Drosselspalte 35 und 36 mit engem Querschnitt. Für die andere Lenkrichtung sind an der Rücklaufnut 20 dieselben Einprägungen 40, 41 und 42 noch einmal vorgesehen, so dass der zugehörige Tiefspalt 44 bzw. die beiden Drosselspalte 45 und 46 entstehen. Die anhand einer Rücklaufnut 20 beschriebenen Tief- und Drosselspalte wiederholen sich an den anderen Rücklaufnuten 21 und 22 in gleicher Weise. Die unterschiedlichen Strömungsquerschnitte der Tief- 34 und Drosselspalte 36 sind am deutlichsten aus Fig. 2 und Fig. 4 zu entnehmen. In Fig. 1 sind am Beispiel der Rücklaufnut 21 die Tiefspalte 34 und 44 so gezeichnet, als würden sie in einer Ebene mit den an den Rücklaufnuten 20 und 22 dargestellten, jedoch nicht bezeichneten Drosselspalten liegen.

*Die Wirkungsweise*

Aus Gründen der Übersichtlichkeit ist im folgenden der Druckölfluss wiederum nur an einem Steuerkantenpaar erläutert.

In der in Fig. 1 bis Fig. 4 gezeigten Neutralstellung des Drehschieberventils kann das Drucköl von der an die Pumpe angeschlossenen Zulaufbohrung 15, über die offene Steuerkante 28, die Steuernut 3 und über den ebenfalls offenen Tiefspalt 34 (Fig. 3 und Fig. 4) zur Rücklaufnut 20 abströmen. Über die ausserdem geöffneten Drosselspalte 35 und 36 kann gleichzeitig eine entsprechend kleine Ölmenge in die Rücklaufnut 20 abströmen. Von der Rücklaufnut 20 gelangt das Drucköl über die Bohrung 23 zur zentralen Rücklaufbohrung 26. Letztere steht mit dem Öltank in Verbindung. Sämtliche Tief- 34 und Drosselspalte 35 sind dabei so dimensioniert, dass sie in Neutralstellung einen Strömungswiderstand von nicht mehr als 1,5 bis 2,0 bar erzeugen.

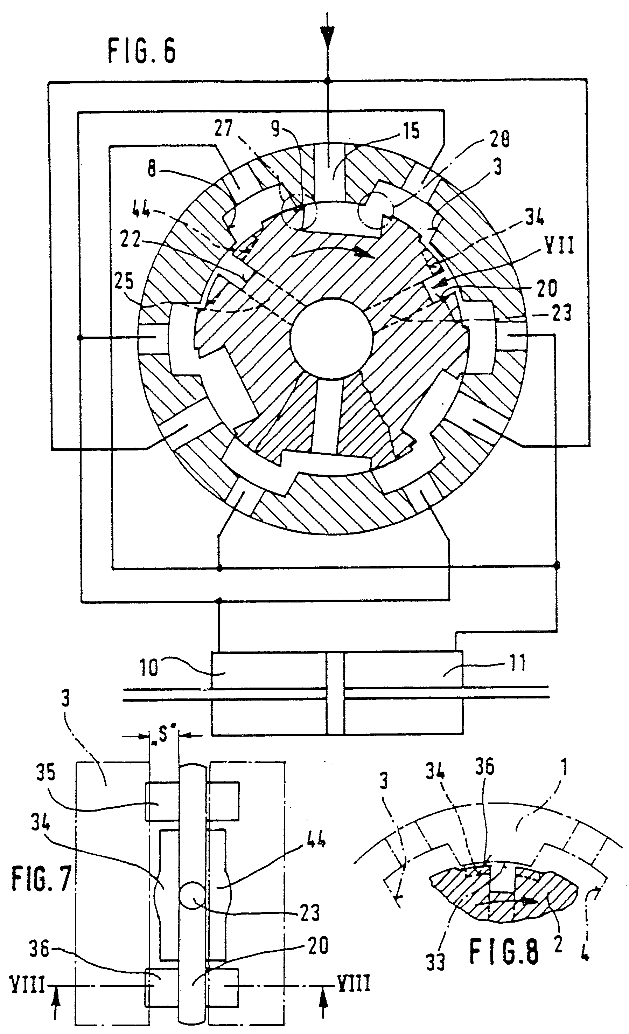

Fig. 6 bis Fig. 8 zeigen einen in Pfeilrichtung nach rechts gegen die Ventilbüchse 1 verdrehten Drehschieber 2. Bei der Verdrehung wird die Zulaufsteuerkante 27 allmählich geschlossen, während sich die Zulaufsteuerkante 28 weit öffnet. Das über die Zulaufbohrung 15 herangeführte Drucköl kann über die Steuernut 3 in den Druckraum 10 des Stellmotors 12 einströmen. Die Druckanregelung erfolgt hierbei zunächst über die Steuerfase 9 sowie den Tiefspalt 34 und die beiden Drosselspalte 35 und 36 auf folgende Weise:

Bei der Verdrehung des Drehschiebers werden zunächst der Tiefspalt 34 und die Steuerfase 9 (Fig. 6, abnehmende Spalttiefe!) geschlossen. Dies geschieht noch im Niederdruckbereich bis etwa 30 bar. Die kurvenförmige Kontur des Tiefspalts 34 sichert zusammen mit der Steuerfase 9 den gewünschten Verlauf der Ventilkennlinie im Niederdruckbereich. Erfahrungsgemäss treten bei Drücken bis 30 bar im sogenannten Ansteuerbereich noch keine Zischgeräusche auf, so dass die Abregelung an der Steuerfase 9 der Zulaufsteuerkante 27, unmittelbar in die entlastete Steuernut 8 erfolgen kann. Über dieser Steuernut 8 wird das aus dem Druckraum 11 ausgeschobene Ölvolumen geführt. Von der Steuernut 8 strömt das Öl über einen weit geöffneten Tiefspalt 44 (Fig. 7) in die Rücklaufnut 22 und von dieser über die Bohrung 25 in die zentrale Rücklaufbohrung 26 und damit in den Öltank zurück. Nachdem die Zulaufsteuerkante 27 bzw. der Tiefspalt 34 durch den Steg 33 (Fig. 7 und Fig. 8) ganz geschlossen ist, erfolgt die weitere Druckanregelung nur noch über die Drosselspalte 35 und 36 an der Rücklaufnut 20. Diese weitere Druckanregelung vollzieht sich im Hochdruckbereich, oberhalb der vorgenannten 30 bar. Im Bereich oberhalb von 30 bar ist die «Zischempfindlichkeit» beim Abregeln in den nicht aufgestauten Rücklauf besonders hoch. Die Zischgeräusche werden jedoch mit Hilfe der Drosselspalte wie folgt unterdrückt:

Nach Fig. 7 und Fig. 8 ist der Tiefspalt 34 vollkommen überdeckt bzw. geschlossen, während ein schmaler Schlitz der Drosselspalte 35 und 36 noch geöffnet ist. Die Abregelung von der Steuernut 3 zur Rücklaufnut 20 erfolgt nunmehr über eine verhältnismässig lange Drosselstrecke «s». Auf dieser langen Drosselstrecke baut sich der Druck in einer Laminarströmung von z. B. 100 bar auf 20 bar ab und es entstehen daher keine Ausströmgeräusche am Eintritt in die Rücklaufnut 20. Die Drosselstrecke wird dabei um so länger, je grösser der Verdrehwinkel des Drehschiebers 2 ist. Bei Maximaldruck sind die Drosselspalte 35 und 36 ganz geschlossen.

*Bezugszeichen*

 1 Ventilbüchse
 2 Drehschieber
 3 Steuernut
 4 Steuernut
 5 Steuernut
 6 Steuernut
 7 Steuernut
 8 Steuernut
 9 Steuerfase
10 Druckraum
11 Druckraum
12 –
13 Zulaufbohrung
14 Zulaufbohrung
15 Zulaufbohrung
16 Steuernut
17 Steuernut
18 Steuernut
19 Steuerfase
20 Rücklaufnut
21 Rücklaufnut
22 Rücklaufnut
23 Radialbohrung
24 Radialbohrung
25 Radialbohrung
26 Rücklaufbohrung
27 Zulaufsteuerkante
28 Zulaufsteuerkante
29 –
30 kurvenförmige Einprägung
31 flache Einprägung
32 flache Einprägung
33 Steg
34 Tiefspalt
35 Drosselspalt
36 Drosselspalt
37 –
38 –
39 –
40 kurvenförmige Einprägung
41 flache Einprägung
42 flache Einprägung
43 –
44 Tiefspalt
45 Drosselspalt
46 Drosselspalt

**Patentansprüche**

1. Drehschieberventil für hydraulische Hilfskraftlenkungen von Kraftfahrzeugen mit folgenden Merkmalen:
– eine in einem Lenkgehäuse gelagerte Ventilbüchse (1) umschliesst einen Drehschieber (2);
– zur Verteilung des Drucköls auf einen Stellmotor (12) sind an der Ventilbüchse (1) und am Drehschieber (2) einander zugewandte Steuernuten mit Steuerkanten eingearbeitet;
– die Steuerkanten am Drehschieber sind mit Steuerfasen versehen;
– in der Neutralstellung des Drehschieberventils besteht zwischen einem Zulaufanschluss und einem Rücklaufanschluss eine nahezu ungedrosselte Verbindung;
– in der Auslenkstellung erfolgt ein gesteuerter Druckaufbau in dem jeweils aktiven Druckraum des Stellmotors durch gezieltes Abregeln eines Teiles des Zulaufstromes an den Steuerkanten, gekennzeichnet durch folgende Merkmale:
– die in Durchflussrichtung hinter den Zulaufsteuerkanten (z. B. 28) gelegene Rücklaufnut (20) im Drehschieber (2) ist (in jeder Drehrichtung) auf einem Teil ihrer Länge mit einem Tiefspalt (34) versehen und
– die Rücklaufnut (20) weist von dem Tiefspalt (34) räumlich getrennte Drosselspalte (35 und 36) auf, die in Umfangsrichtung länger als die Tiefspalte (34) sind.

2. Drehschieberventil nach Anspruch 1, dadurch gekennzeichnet, dass die Drosselspalte (35 und 36) mit der Ventilbüchse (1) einen Umfangsspalt mit geringer Höhe bilden und beiderseits des Tiefspaltes (34) angeordnet sind.

3. Drehschieberventil nach Anspruch 1 oder 2, dadurch gekennzeichnet, dass in Auslenkstellung (z. B. nach rechts) des Drehschiebers (2) die den entlasteten Druckraum (11) steuernde Steuerfase (9) der Zulaufsteuerkante (27) mit dem Tiefspalt (34) im Niederdruckbereich geschlossen wird.

4. Drehschieberventil nach Anspruch 1, dadurch gekennzeichnet, dass die Rücklaufnut (20) über eine Radialbohrung (23) mit einer zentralen Rücklaufbohrung (26) des Drehschiebers (2) an den Öltank angeschlossen ist.

5. Drehschieberventil nach Anspruch 1, dadurch gekennzeichnet, dass der Tiefspalt (34) in Auslenkrichtung des Drehschiebers (2) eine kurvenförmige Kontur aufweist.

**Claims**

1. A rotary sliding valve for hydraulic power-assisted steering systems for motor vehicles, having the following features:
– a valve liner (1) mounted in a systems housing surrounds a rotary sliding valve (2);
– for distributing the pressurized oil to a servo motor (12), the valve liner (1) and the rotary sliding valve (2) have machined control grooves with control edges facing each other;
– the control edges on the rotary sliding valve are provided with control bevels;
– in the neutral position of the rotary sliding valve there exists between an incoming flow connection and a return flow connection an almost choke-free communication;

— in the rotated position there occurs a controlled pressure rise in the then active pressure area of the servo motor by a controlled deflection of a part of the inflow stream at the control edges;
characterized in and by the following features:
— the return flow channel (20) located behind each of the incoming flow control edges (e.g. 28) in the direction of flow in the rotary sliding valve (2) is (in each direction of rotation) provided over a portion of its length with a deep gap (34), and
— the return flow channel (20) has choke gaps (35 and 36) spatially separated from the deep gap (34), which choke gaps are longer in circumferential direction than the deep gap (34).

2. A rotary sliding valve according to claim 1, characterized in that the choke gaps (35 and 36) form with the valve liner (1) a circumferential gap of low height and are arranged on both sides of the deep gap (34).

3. A rotary slide valve according to claim 1 or 2, characterized in that in the rotated position (e.g. to the right) of the rotating valve (2), the control bevel (9), controlling the depressurized chamber (11), of the incoming flow control edge (27) is closed by the deep gap (34) in the low-pressure area.

4. Rotary sliding valve according to claim 1, characterized in that the return flow channel (20) is connected through a radial bore (23) with a central return flow bore (26) of the rotating slide valve (2) to the oil reservoir.

5. A rotary sliding valve according to claim 1, characterized in that the deep gap (34) has a curved contour in the direction of deflection of the rotating valve (2).


## Revendications

1. Distributeur de direction à tiroir rotatif pour directions assistées de véhicules automobiles présentant les caractéristiques suivantes:
— une douille de soupape (1) logée dans un boîtier de direction entoure un tiroir rotatif (2);
— la distribution de l'huile hydraulique sur un servomoteur (12) est assurée par des gorges de commande avec arêtes de commandes disposées face à face sur la douille de soupape (1) et sur le tiroir rotatif (2);
— les arêtes de commande du tiroir rotatif sont munies de chanfreins de commande;
— une liaison pratiquement sans étranglement est établie entre un raccord de débit d'admission et un raccord de débit de retour en position neutre du distributeur de direction à tiroir rotatif;
— en position de déplacement une pression commandée est produite dans la chambre de pression active respective du servomoteur sous l'effet de la coupure d'alimentation provoquée d'une partie du débit d'admission aux arêtes de commande,
caractérisé en ce que
— la gorge de débit de retour (20) dans le tiroir rotatif (2) dans le sens du débit placée à l'arrière des arêtes de débit d'admission (p. ex. 28) présente (dans chaque sens de rotation) une fente profonde (34) sur une partie de sa longueur;
— la gorge de débit de retour (20) présente des fentes d'étranglement (35 et 36) séparées dans l'espace dans la fente profonde (34) qui sont, en direction de rotation périphérique, plus longues que la fente profonde (34).

2. Distributeur de direction à tiroir rotatif selon la revendication 1, caractérisé en ce que les fentes d'étranglement (35 et 36) forment avec la douille de soupape (1) une fente périphérique en rotation d'une hauteur minime et sont disposées des deux côtés de la fente profonde (34).

3. Distributeur de direction à tiroir rotatif selon les revendications 1 ou 2, caractérisé en ce que, en position de déplacement (p. ex. vers la droite) du tiroir rotatif (2), le chanfrein de commande (9) de la crête de commande de débit d'admission (27) commandant la chambre de pression déchargée (11) est fermé avec la fente profonde (34) dans la zone de basse pression.

4. Distributeur de direction à tiroir rotatif selon la revendication 1, caractérisé en ce que la gorge de débit de retour (20) est raccordée au réservoir d'huile par un alésage radial (23) présentant un alésage central de débit de retour (26) du tiroir rotatif (2).

5. Distributeur de direction à tiroir rotatif selon la revendication 1, caractérisé en ce que la fente profonde (34) présente un profil en forme de courbe en direction de déplacement du tiroir rotatif (2).

FIG. 1

FIG. 2

FIG.4

FIG.3

FIG.5

**FIG. 6**

**FIG. 7**

**FIG. 8**